**Europäisches Patentamt**

**European Patent Office**

**Office européen des brevets**

(19)

(11) Veröffentlichungsnummer: **0 297 141**
**A1**

# EUROPÄISCHE PATENTANMELDUNG

(12)

Veröffentlicht nach Art. 158 Abs. 3 EPÜ

(21) Anmeldenummer: **87907163.7**

(22) Anmeldetag: **01.10.87**

Daten der zugrundeliegenden internationalen Anmeldung:

(86) Internationale Anmeldenummer:
**PCT/SU87/00111**

(87) Internationale Veröffentlichungsnummer:
**WO88/02447 (07.04.88 88/08)**

(51) Int. Cl.³: **F 16 C 29/06**

(30) Priorität: **03.10.86 SU 4127891**

(43) Veröffentlichungstag der Anmeldung:
**04.01.89 Patentblatt 89/1**

(84) Benannte Vertragsstaaten:
**AT DE FR GB IT**

(71) Anmelder: **LIPETSKY STANKOSTROITELNY ZAVOD**
**ul. Sovetskaya, 66**
**Lipetsk, 398636(SU)**

(72) Erfinder: **NISENMAN, Vladimir Isaevich**
**ul. Lenina, 29-66**
**Lipetsk, 398020(SU)**

(72) Erfinder: **SHIRYAEV, Jury Vasilievich**
**ul. Pervomaiskaya, 38-112**
**Lipetsk, 398001(SU)**

(72) Erfinder: **IVANNIKOV, Alexandr Alexeevich**
**ul. Pervomaiskaya, 38-116**
**Lipetsk, 398001(SU)**

(74) Vertreter: **Patentanwälte Beetz sen. - Beetz jun. Timpe -**
**Siegfried - Schmitt-Fumian- Mayr**
**Steinsdorfstrasse 10**
**D-8000 München 22(DE)**

(54) **KUGELLAGER.**

(57) Rollenwälzlagerung, die ein Gehäuse (1) enthält, das Stirnwände (4), eine untere und eine obere Fläche aufweist, auf jeder von denen zu den Stirnwänden (4) des Gehäuses (1) verlaufende Durchgangsnuten (2) rechteckigen Profils eingearbeitet sind, deren Längsachsen (3) auf ein und derselben Ebene liegen, wobei an den Stirnwänden (4) des Gehäuses (1) Deckel (5) mit nach dem Gehäuse hin offenen Radiusnuten (6) rechteckigen Profils sowie zwischen den Deckeln (5) und dem Gehäuse (1) befestigte halbzylinderförmige Einsätze (8) angeordnet sind, welche Einsätze (8) mit den Gehäuse- und Deckelnuten (2) bzw. (6) einer mit Rollen (15) und Rollenkäfigen (16) gefüllten geschlossenen Kanal (7) gleichbleibenden Querschnitts bilden, dessen jede der Seitenflächen (13) Eindrehungen (14) aufweist, wobei die Rollenkäfige (16) Bunde (17) mit Führungsflächen (18) enthalten, welche mit der Oberfläche der Eindrehungen (14) im geschlossenen Kanal (7) zusammenwirken, wobei die Nuten (6) der Deckel (5) halbzylindrisch gestaltet sind, und die Deckel (5) und Stirnwände (4) des Gehäuses (1) weisen mit den Einsätzen (8) Mittel zur gegenseitigen Sicherung auf, während die Führungsfläche (18) des Bundes (17) im spitzen Winkel ($\alpha$) zur Bodenfläche (19) des geschlossenen Kanals (7) angeordnet ist.

FIG. 1

FIG. 2

ROLLENWÄLZLAGERUNG

Gebiet der Technik

Die Erfindung bezieht sich auf das Gebiet des Werkzeugmaschinenbaus und der Robotertechnik und betrifft insbesondere Wälzlagerungen, die zur fortschreitenden geradlinigen Verschiebung von Maschinenbaugruppen bestimmt sind.

Zugrundeliegender Stand der Technik

Es ist eine Rollenwälzlagerung bekannt, die ein Gehäuse mit einem auf dessen Aussenfläche ausgebildeten, mit Rollen gefüllten geschlossenen Kanal gleichbleibenden Querschnitts enthält. Zum Festhalten der Rollen wird ein geschlossenes Flachband verwendet, das an der Berührungsstelle der Rollen mit der Wirkfläche (Maschinenbaugruppe) ein Fenster aufweist (SU, A, 611043).

Diese Rollenwälzlagerung ist kompliziert in der Fertigung und betriebsunsicher, was mit der Herstellung des geschlossenen Flachbandes an Verbindungsstellen der geradlinigen und radialen Abschnitte zusammenhängt. Da zusätzliche Reibungskräfte zwischen den Rollen auftreten, wird ausserdem die Lebensdauer der Lagerung durch Nichtvorhandensein von Rollenkäfigen verkürzt. Die Rollen werden auch stirnseitig nicht geführt, wodurch sie beim Eintritt in den Arbeitsbereich schief laufen (keine Zügigkeit der Bewegung und Rutschen), wobei infolgedessen es nicht möglich ist mit hohen Geschwindigkeiten zu arbeiten.

Es ist ebenfalls eine Rollenwälzlagerung (HU, A, 178294) bekannt, die ein Gehäuse, Deckel mit Radiusnuten, zwischen dem Gehäuse und den Deckeln befestigte halbzylinderförmige Einsätze enthält. Dabei ist der geschlossene mit Rollen gefüllte Kanal durch am Gehäuse angeordnete abnehmbare Leisten gebildet.

Die bei der Herstellung dieser Rollenwälzlagerung entstehenden Schwierigkeiten und deren Betriebsunsicherheit hängen mit der Gewährleistung eines unveränderlichen Querschnitts des mit Rollen gefüllten Kanals zusammen, weil die die Axialverschiebung der Rollen begrenzende Leiste unstarr und kompliziert gestaltet ist.

Es ist auch eine Rollenlagerung (DE, C, 2123529) bekannt, die ein Gehäuse enthält, das Stirnwände, eine untere und eine obere Fläche aufweist, in jeder von denen zu den Stirnwänden des Gehäuses verlaufende Durchgangsnuten rechteckigen Profils eingearbeitet sind, deren Längsachsen auf ein und derselben Ebene liegen, wobei an den Stirnwänden Deckel mit nach dem Gehäuse hin offenen Radiusnuten rechteckigen Profils sowie zwischen den Deckeln und dem Gehäuse befestigte halbzylinderförmige Einsätze angeordnet sind, welche Einsätze mit den Gehäuse- und Deckelnuten einen mit Rollen und Rollenkäfigen gefüllten Kanal gleichbleibenden Querschnitts bilden, wobei die Rollenkäfige Bunde mit Führungsflächen aufweisen, welche mit der Oberfläche der Eindrehungen im geschlossenen Kanal zusammenwirken, und wobei des Zentrieren der Deckel relativ zur Stirnfläche des Gehäuses durch Deckelbunde und diesen zugeordnete Vertiefungen im Gehäuse erfolgt.

Die Betriebsunsicherheit der Lagerung erwächst aus der Schwierigkeit, einen gleichbleibenden Querschnitt für den geschlossenen mit Rollen und Käfigen gefüllten Kanal, insbesondere an Stosstellen der Stirnwände des Gehäuses und der Deckel sicherzustellen. Auf der Radiusfläche der Deckel ist ein Umordnen der Rollen und Käfige möglich. Demzufolge nimmt die Reibungskraft zu, die die Schlagfehler der Rollen und Schiefstellung der Käfige und Rollen verursacht. Eine Spannungskonzentration an den Bunden der Käfige führt zum Bruch der letzteren.

Offenbarung der Erfindung

Der Erfindung liegt die Aufgabe zugrunde, eine Bauart der Rollenwälzlagerung zu entwickeln, die einfach herstellbar und betriebssicher zu sein vermag.

Diese Aufgabe wird dadurch gelöst, dass bei einer Rollenwälzlagerung, die ein Gehäuse enthält, das Stirnwände, eine untere und eine obere Fläche aufweist, in jeder von denen zu den Stirnwänden des Gehäuses verlaufende Durchgangsnuten rechteckigen Profils eingearbeitet sind, deren Längsachsen auf ein und derselben Ebene liegen, wobei an den Stirnwänden Deckel mit nach dem Gehäuse hin offenen Radiusnuten rechteckigen Profils sowie zwischen den Deckeln und dem Gehäuse befestigte halbzylinderförmige Einsätze angeordnet sind, welche Einsätze mit den Gehäuse- und Deckelnuten einen mit Rollen und Rollenkäfigen gefüllten geschlossenen Kanal gleichbleibenden Querschnitts bilden, dessen jede der Seitenflächen Eindrehungen aufweist, wobei die Rollenkäfige Bunde mit Führungsfläche enthalten, die mit der Oberfläche der Eindrehungen im geschlossenen Kanal zusammenwirken, erfindungsgemäss die Deckelnuten halbzylindrisch gestattet sind, die Deckel und Stirnwände des Gehäuses mit den Einsätzen Mittel zur gegenseitigen Sicherung aufweisen, während die Führungsfläche des Bundes in einem spitzen Winkel zur Bodenfläche des geschlossenen Kanals angeordnet ist.

Es ist dabei zweckmässig, die Mittel zur gegenseitigen Sicherung als Endstücke des Einsatzes auszuführen, deren Halbmesser geringer als der seines Mittelstücks, der Vertiefungen an den Stirnwänden des Gehäuses und der Deckel ist, in denen die Endstücke der Einsätze Platz finden.

Die Verwendung eines Einsatzes, der gleichzeitig das Gehäuse und die Deckel nach zwei gegenseitig senkrechten Ebenen zentriert, hat es gestattet, die Möglichkeit einer Umordnung der Rollen in der Radiusstrecke des geschlossenen Kanals bei deren Ein-, Durch- und Auslauf und somit das Krummziehen und den Bruch der Käfige auszuschliessen. Der Optimalwert des durch die Führungsfläche des Käfigbundes und die Bodenfläche des geschlossenen Kanals gebildeten spitzen Winkels beträgt 30 bis 60°. Mit diesem Winkelwert wird die maximale Betriebssicherheit der Lagerung gewährleistet.

Durch die vorliegende Bauart der Wälzlagerungen wird die Tragfähigkeitscharakteristik um 20% höher, diese haben eine hohe Lebensdauer, sind betriebssicher und einfach herstellbar.

Kurze Beschreibung der Zeichnungen

Nachstehend wird das Wesen der Erfindung an Hand der beigefügten Zeichnungen näher erläutert; es zeigt:

Fig. I eine Gesamtansicht der erfindungsgemässen Wälzlagerung;

Fig. 2 einen Schnitt gemäss Linie A-A in Fig. I, in vergrössertem Masstab;

Fig. 3 einen Schnitt gemäss Linie B-B in Fig. I, in vergrössertem Masstab.

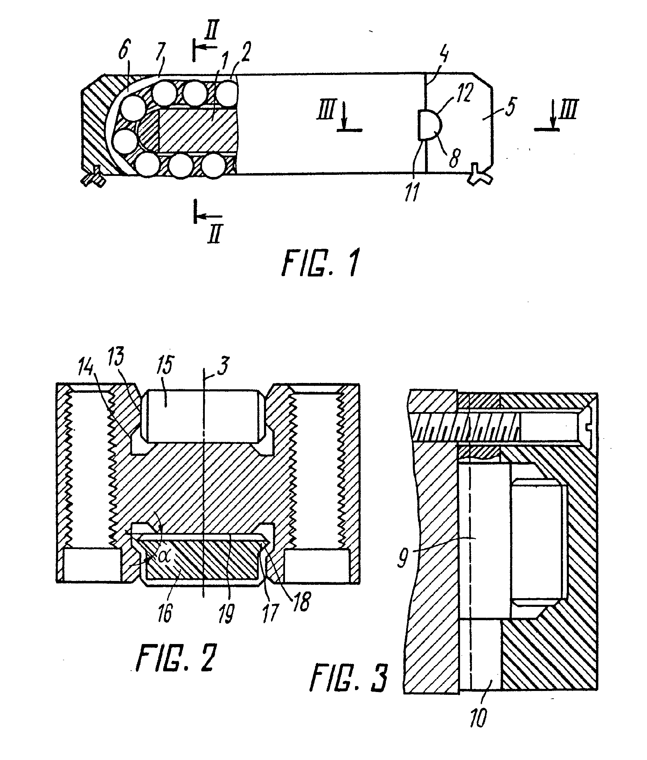

### Beste Ausführungsform der Erfindung

Die Rollenwälzlagerung besteht aus einem Gehäuse I mit zwei Durchgangsnuten 2 rechteckigen Profils, die in der unteren und oberen Fläche des Gehäuses I eingearbeitet sind. Die Längsachsen 3 der Nuten 2 verlaufen auf ein und derselben Ebene. Die Nuten 2 erstrecken sich auf Stirnwände 4 des Gehäuses I. Deckel 5 sind an den Stirnwänden 4 des Gehäuses I angeordnet und weisen halbzylindrisch gestaltete Radiusnuten 6 rechteckigen Profils auf. Um einen geschlossenen Kanal 7 gleichbleibenden Querschnitts zu bilden, sind aus einem Mittelstück 9 und Endstücken IO bestehende Einsätze 8 zwischen den Deckeln 5 und dem Gehäuse I angeordnet. Zweckmässigerweise wird dabei der Halbmesser der Enstücke IO geringer als der des Mittelstücks 9 ausgeführt.

Die Endstücke IO der Einsätze 8, die in Vertiefungen II der Stirnwände 4 des Gehäuses I und Vertiefungen I2 des Deckels 5 angeordnet sind, können als Mittel zur gegenseitigen Sicherung dienen. In jeder der Seitenflächen I3 des Kanals 7 sind Eindrehungen I4 eingearbeitet. Der Kanal 7 ist mit Rollen I5 mit Bunde I7 aufweisenden Käfigen I6 gefüllt. Die Führungsfläche I8 des Bundes I7 ist im spitzen Winkel $\propto$ zur Bodenfläche I9 des geschlossenen Kanals 7 angeordnet. Bei einem Wert des Winkels $\propto$ von 30 bis 60° wird die maximale Betriebssicherheit der Lagerung nach der Erfindung gewährleistet.

Ist der Winkel $\propto$ grösser als ein spitzer Winkel, wird die Lagerung arbeitsunfähig.

Die erfindungsgemässe Rollenwälzlagerung arbeitet wie folgt.

Bei ihrer Verschiebung über die Ebene laufen die Rollen I5 und die Käfige I6 im geschlossenen Kanal 7 um. In der Umlenkzone greifen dabei Kräfte an, die die Rollen I6 gegen die Oberfläche der Radiusnuten 6 der Deckel 5 andrücken.

Durch die Käfige I6 werden die Rollen I5 im geschlossenen Kanal 7 zurückgehalten, und als Mittel zum Zurückhalten der Käfige I6 im geschlossenen Kanal 7 dienen die Bunde I7 mit der Führungsfläche I8, über die eine gleichmässige Lastverteilung erfolgt. Zur gegenseitigen Sicherung der Stirnwände 4 des Gehäuses I und der Deckel 5 werden die Endstükke IO der Einsätze 8 in den Vertiefungen II an den Stirnwänden 4 des Gehäuses I und in den Vertiefungen I2 am Deckel 5 eingebracht. Die Einsätze 8 sind als Halbzylinder ausgeführt.

Beim Übergang der Rollen I5 und der Käfige I6 in die Umlenkzone des geschlossenen Kanals 7 ist keine Umordnen der Rollen I5 und Krummziehen der Käfige I6 möglich, wodurch die Lebensdauer der erfindungsgemässen Lagerung verlängert und ihre Betriebssicherheit erhöht wird.

### Gewerbliche Anwendbarkeit

Die Rollenwälzlagerungen finden bei Beförderung der Montageeinheiten von Werkzeugmaschinen, Robotern, Manipulatoren und sonstigen Erzeugnissen in geradliniger Richtung Verwendung.

Die Rollenwälzlagerungen können in Werkzeugmaschinen vom Typ Bearbeitungszentrum, Tiefschleifmaschinen z.B. zum Schleifen von Turbinenschaufeln eingebaut werden.

0297141

PATENTANSPRÜCHE

I. Rollenwälzlagerung, die ein Gehäuse (I) enthält, das Stirnwände (4), eine untere und eine obere Fläche aufweist, auf jeder von denen zu den Stirnwänden (4) des Gehäuses (I) verlaufende Durchgangsnuten (2) rechteckigen Profils eingearbeitet sind, deren Längsachsen (3) auf ein und derselben Ebene liegen, wobei an den Stirnwänden (4) des Gehäuses (I) Deckel (5) mit nach dem Gehäuse hin offenen Radiusnuten (6) rechteckigen Profils sowie zwischen den Deckeln (5) und dem Gehäuse (I) befestigte halbzylinderförmige Einsätze (8) angeordnet sind, welche Einsätze (8) mit den Gehäuse- und Deckelnuten (2) bzw. (6) einen mit Rollen (I5) und Rollenkäfigen (I6) gefüllten geschlossenen Kanal (7) gleichbleibenden Querschnitts bilden, dessen jede der Seitenflächen (I3) Eindrehungen (I4) aufweist, wobei die Rollenkäfige (I6) Bunde (I7) mit Führungsflächen (I8) enthalten, welche mit der Oberfläche der Eindrehungen (I4) im geschlossenen Kanal (7) zusammenwirken, dadurch g e k e n n z e i c h n e t, dass die Nuten (6) der Deckel (5) halbzylindrisch gestaltet sind, dass die Deckel (5) und die Stirnwände (4) des Gehäuses (I) mit den Einsätzen (8) Mittel zur gegenseitigen Sicherung aufweisen, während die Führungsfläche (I8) des Bundes (I7) in einem spitzen Winkel $\alpha$ zur Bodenfläche (I9) des geschlossenen Kanals (7) angeordnet ist.

2. Rollenwälzlagerung nach Anspruch I, dadurch g e - k e n n z e i c h n e t, dass die Mittel zur gegenseitigen Sicherung als Endstücke (IO) der Einsätze (8) ausgeführt sind, deren Halbmesser geringer als der ihrer Mittelstücke (9), von Vertiefungen (II) und (I2) an den Stirnwänden (4) des Gehäuses (I) und der Deckel (5) ist, in denen die Endstücke (IO) der Einsätze (8) Platz finden.

3. Rollenwälzlagerung nach Anspruch I, dadurch g e - k e n n z e i c h n e t, dass der Wert des durch die Führungsfläche (I8) des Bundes (I7) des Käfigs (I6) und die Bodenfläche (I9) des geschlossenen Kanals (7) gebildeten spitzen Winkels $\alpha$ 30 bis 60° beträgt.

FIG. 1

FIG. 2

FIG. 3

# INTERNATIONAL SEARCH REPORT

**0297141**

International Application No PCT/SU 87/00111

## I. CLASSIFICATION OF SUBJECT MATTER (if several classification symbols apply, indicate all) *

According to International Patent Classification (IPC) or to both National Classification and IPC

$IPC^4$ F 16 C 29/06

## II. FIELDS SEARCHED

### Minimum Documentation Searched [7]

| Classification System | Classification Symbols |
|---|---|
| $IPC^4$ | F 16 C 29/04, 29/06 |

Documentation Searched other than Minimum Documentation
to the Extent that such Documents are included in the Fields Searched [8]

## III. DOCUMENTS CONSIDERED TO BE RELEVANT [9]

| Category * | Citation of Document, [11] with indication, where appropriate, of the relevant passages [12] | Relevant to Claim No. [13] |
|---|---|---|
| A | FR, A1, 2266821, (INDUSTRIEWERK SCHAEFFLER OHG) 31 October 1975 (31.10.75), see page 5, lines 16-20, fig. 2 | 1 |
| A | DE, A 1, 2618535, (Industriewerk Schaeffler OHG), 10 November 1977 (10.11.77), see page 8, fig. 5 | 1 |
| A | DE, A1, 3117491, (Nippon Thompson Co Ltd), 28 January 1982 (28.01.82), see page 7, fig. 1,2 | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 25 November 1987 (25.11.87) | 14 January 1988 (14.01.88) |

| International Searching Authority | Signature of Authorized Officer |
|---|---|
| ISA/SU | |

Form PCT/ISA/210 (second sheet) (January 1985)